# EUROPÄISCHE PATENTSCHRIFT

(11) **EP 2 456 596 B1**
(45) Veröffentlichungstag und Bekanntmachung des Hinweises auf die Patenterteilung: **03.04.2019**
(21) Anmeldenummer: 10740184.6
(22) Anmeldetag: 20.07.2010
(51) Int. Cl.: B23P 19/06, B21J 15/02, F16B 37/06, B21J 15/36, F16B 5/04

(54) **BEFESTIGEN VON NIETELEMENTEN**
FIXING OF RIVET ELEMENTS
FIXATION D ÉLÉMENTS RIVETS

(30) Priorität: 22.07.2009 DE 102009035338
(43) Veröffentlichungstag der Anmeldung: 30.05.2012
(73) Patentinhaber: Volkswagen AG, 38440 Wolfsburg (DE)
(72) Erfinder: BECK, Friedrich, 74613 Öhringen-Verrenberg (DE); WOLFARTH, Uwe, 74575 Schrozberg (DE); LEYKAUF, Dominik, 74214 Schöntal-Aschhausen (DE)
(86) Internationale Anmeldenummer: PCT/EP2010/060459
(87) Internationale Veröffentlichungsnummer: WO 2011/009850

(56) Entgegenhaltungen:
- EP-A1- 0 864 766
- EP-A2- 2 039 947
- EP-A2- 2 187 071
- US-A- 2 750 660
- US-A- 3 091 843
- US-A- 3 920 059
- US-A- 4 064 617
- US-A1- 2004 042 871
- US-A1- 2004 093 712

## Beschreibung

Die Erfindung betrifft eine Anordnung zum Verbinden von Nietelementen nach dem Oberbegriff des Anspruches 1 sowie ein Verfahren zum Verbinden nach dem Oberbegriff des Anspruches 5.

Zum Stand der Technik gehören Stanzmuttern oder ähnliche Bauteile. Bei einem bekannten Funktionselement dieser Art dient eine solche Stanzmutter in Zusammenarbeit mit einer Matrize dazu, ein Loch in einem Stück Blech durch Stanzen und eine Verbindung zwischen dem Blech und der Stanzmutter herzustellen. Zu diesem Zweck wird ein Teil der Stanzmutter, der durch das gestanzte Loch in dem Blech hindurch ragt, auf der gegenüberliegenden Seite nach außen umgebördelt beziehungsweise umgebogen. Die eigentliche Befestigung geschieht also unmittelbar nach dem Herstellen des Lochs. Hierzu wird auf der Rückseite des Blechbauteils entsprechend viel Platz benötigt (DE 10114200 A1).

Bei allen bekannten Vorgängen dieser Art wird darüber hinaus der Rand des Blechs verformt.

Aus der US 2750660 A ist eine gattungsgemäße Anordnung bekannt. Diese enthält eine Stanzmutter, die mit einer Matrize zusammenwirkt, die in ihrer Stirnfläche Nuten aufweist. In diese Nuten wird das Material des Plattenelements umgebogen, und an dieser Stelle erfolgt auch eine radiale Verformung des Schafts der Stanzmutter.

Bei einer weiteren Stanzmutter erfolgt die Festlegung ausschließlich durch eine Verformung des Plattenelements (EP 0864766 A1). Weitere Anordnungen zum Verbinden von Nietelementen mit einem Plattenelement sind aus der US 3 091 843 A, aus der US 4 064 617 A, aus der US 3 920 059 A, aus der US 2004/093712 A1, aus der US 2004/042871 A1, aus der EP 2 039 947 A2 und aus der EP 2 187 071 A2 bekannt.

Die genannten Funktionselemente können als Stanzmutter, aber auch als Stanzbolzen ausgebildet sein. Sie dienen in erster Linie dazu, an dem Blech weitere Gegenstände befestigen zu können.

Es kann aber auch die Problematik auftreten, dass das Blech selbst an einem anderen Bauteil angebracht werden soll, an dem es sich nicht direkt selbst befestigen lässt, beispielsweise dann, wenn das Blechelement aus Aluminium besteht und sich nicht einfach mit einer aus Stahlblech bestehenden Tragstruktur verschweißen lässt. In diesem Fall kann man aus Stahl bestehende Niete verwenden, die das Aluminium halten und selbst an der Tragstruktur angeschweißt werden.

Der Erfindung liegt die Aufgabe zu Grunde, eine Möglichkeit zu schaffen, Nietelemente derart mit einem Plattenelement zu verbinden, dass auf der Rückseite des Plattenelements kein Platz für einen Nietvorgang zur Verfügung stehen muss.

Zur Lösung dieser Aufgabe schlägt die Erfindung eine Anordnung zum Verbinden mit den Merkmalen des Anspruchs 1 sowie ein Verfahren zum Verbinden von Nietelementen mit den Merkmalen des Anspruches 5 vor. Weiterbildungen der Erfindung sind Gegenstand von abhängigen Ansprüchen.

Die Matrize enthält also eine Öffnung, beispielsweise eine kreisrunde Öffnung, deren Achse senkrecht zu der Anlagefläche verläuft. Das zu verwendende Nietelement weist eine dieser Öffnung entsprechende Form und Größe auf. Beispielsweise ist die Öffnung kreisrund, und der Schaft des Nietelements ebenfalls kreisrund, wobei der Durchmesser des Schafts geringfügig kleiner ist als der Durchmesser der Öffnung. Dadurch wird ein Schneidspalt gebildet. Beim Einstanzen des Nietelements sorgt der mindestens eine Vorsprung dafür, dass das Nietelement an dieser Stelle gegen den Vorsprung trifft und damit sich nur zur Seite hin verformen kann, also in radialer Richtung. Durch die Verformung in radialer Richtung nach außen erfolgt eine Festlegung des Nietelements in der Öffnung selbst.

In der Erfindung ist vorgesehen, dass die dem Plattenelement zugewandte Vorderseite des Vorsprungs in der Anlagefläche der Matrize liegt. Damit wird erreicht, dass bei der Verformung die Stirnseite des Schafts des Nietelements mindestens im Bereich der Kante des Schafts bündig mit der Rückseite des Plattenelements verläuft.

In nochmaliger Weiterbildung der Erfindung kann vorgesehen sein, dass die Öffnung in der Anlagefläche der Matrize scharfkantig ausgebildet ist. Dadurch wird ein sauberes Abtrennen des Materials innerhalb der Öffnung erreicht, was gleichzeitig dazu führt, dass das Plattenelement im Bereich der Öffnung eben bleibt.

Die Zahl und Größe der Vorsprünge wird so gewählt, dass die Festlegung des Nietelements den jeweils vorherrschenden Anforderungen genügt. Beispielsweise können mehr als ein Vorsprung vorhanden sein, die dann insbesondere gleichmäßig über den Umfang verteilt sind. Die Größe der Vorsprünge sowohl in Umfangsrichtung als auch in radialer Richtung kann je nach den Umständen des Einzelfalls ausgewählt werden. Als besonders günstig hat sich die Anordnung von drei solchen Vorsprüngen herausgestellt.

Der mindestens eine Vorsprung kann unter Umständen auch als getrenntes Teil vorgesehen sein, so dass es möglich ist, die radiale Verformung nachträglich durchzuführen, indem der Vorsprung durch die Matrize hindurch in Eingriff gebracht wird. Es hat sich jedoch als besonders sinnvoll herausgestellt, dass der mindestens eine Vorsprung, beziehungsweise bei mehreren Vorsprüngen alle Vorsprünge, als einstückiger Teil der Matrize ausgebildet ist.

Die Erfindung schlägt ebenfalls ein Verfahren zum Verbinden von Nietelementen mit einem Plattenelement vor. Erfindungsgemäß wird eine Matrize mit einer durchgehenden Stanzöffnung vorbereitet, deren Größe an den Schaft des Nietelements angepasst ist. An die Matrize wird dann das Blechelement angelegt, das noch keine Öffnung aufweist. Das Nietelement wird mit seinem Schaftabschnitt voraus in Richtung auf die Öffnung bewegt, trifft auf das Blechelement und stanzt dort das Loch. Beim weiteren vorwärts Bewegen des Nietelements wird der Schaft des Nietelements in seinem Randbereich radial nach außen verformt. Diese radiale Verformung des Schafts des Nietelements führt zu einer Festlegung in dem gerade gestanzten Loch in dem Plattenelement.

Diese Verformung des Schafts in seinem Randbereich kann erfindungsgemäß während des Auftreffens der Stirnfläche des Schafts auf der Anlagefläche der Matrize geschehen.

Die radiale Verformung des Schafts geschieht in seinem Randbereich durch das Auftreffen der Stirnfläche des Schafts auf der Anlagefläche der Matrize an mindestens einer Stelle.

Die radiale Verformung geschieht derart, dass die Stirnfläche des Schafts des Nietelements mindestens in ihrem Randbereich bündig mit der dem Kopf des Nietelements abgewandten Rückseite des Plattenelements verläuft.

In nochmaliger Weiterbildung der Erfindung kann vorgesehen sein, dass die radiale Verformung des Schafts des Nietelements an einzelnen einen Abstand voneinander aufweisenden Stellen geschieht, die beispielsweise gleichmäßig über einen Umfang verteilt angeordnet sind. Durch die nur stellenweise radiale Verformung wird gleichzeitig auch eine Verbindung hergestellt, die in Umfangsrichtung formschlüssig ist.

Als Nietelemente kommen die unterschiedlichsten Arten infrage, nicht nur Muttern, Schweißniete, Stehbolzen oder dergleichen.

Beispielsweise kann es auf diese Weise erreicht werden, dass man in einem Aluminiumblech mehrerer Niete in der beschriebenen Weise befestigt und diese Niete dann an einer Stahlkonstruktion anschweißt. Damit wird dann das Aluminiumblech einer Stahlkonstruktion befestigt.

Es kann sich sowohl um Niete mit einem Flachkopf als auch um Niete mit einem Senkkopf handeln.

Hierbei zeigen:
- Figur 1: schematisch wichtige Teile der Anordnung zur Herstellung einer Verbindung;
- Figur 2: einen Querschnitt durch die Anordnung der Figur 1;
- Figur 3: den Querschnitt der Figur 2 in einem weiteren Stadium der Herstellung;
- Figur 4: den Querschnitt in einem nochmals weiteren Stadium;
- Figur 5: die fertig gestellte Vernietung.

Ausgangspunkt für die Herstellung einer Verbindung ist eine Matrize 1, die eine Anlagefläche 2 bildet. Im dargestellten Beispiel, die für ein ebenes Plattenelement 3 bestimmt ist, ist die Anlagefläche 2 eben. In der Anlagefläche 2 der Matrize 1 mündet eine Stanzöffnung 4. Diese Stanzöffnung wird von dem Ende eines Durchgangs durch die Matrize 1 gebildet. Längs des Umfangs der Stanzöffnung 4 sind drei Vorsprünge 5 vorhanden, die den Umfang der Stanzöffnung 4 nach innen verlagern. Die Vorsprünge 5 sind durch Rippen 6 gebildet, die sich durch die Matrize 1 über eine bestimmte Länge erstrecken.

Auf diese Anlagefläche 2 wird im Bereich der Stanzöffnung 4 das bereits erwähnte Plattenelement 3 gelegt, in dem ein Nietelement 7 festgelegt werden soll. Das Nietelement 7 weist einen Nietkopf 8 und einen sich von der Unterseite des Nietkopfs 8 erstreckenden Nietschaft 9 auf.

Mithilfe eines nicht dargestellten Stempels oder eines sonstigen Antriebs wird das Nietelement 7 auf das Plattenelement 3 und in die Öffnung 4 gepresst. Dabei stanzt der Schaft 9 des Nietelements 7 mit seinem scharfkantigen Rand 10 ein Loch in dem Plattenelement 3.

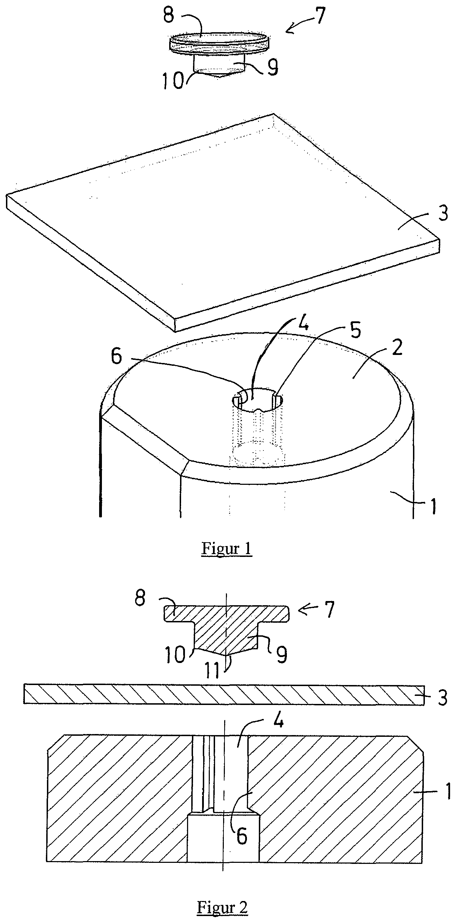

Zur Wirkungsweise wird jetzt zunächst auf die Figur 2 verwiesen, die die Anordnung der Figur 1 in einem Schnitt darstellt. Man kann sehen, dass der Durchmesser des Schafts 9 des Nietelements 10 dem Durchmesser der Stanzöffnung 4 entspricht, mit Ausnahme der die Vorsprünge 5 bildenden Rippen 6. Innerhalb der die Stirnfläche umgebenden Kante 10 weist die Stirnfläche einen Vorsprung 11 auf. Im Randbereich ist jedoch die Stirnfläche eben. Der Schaft 9 ist gegenüber der Öffnung 4 ausgerichtet.

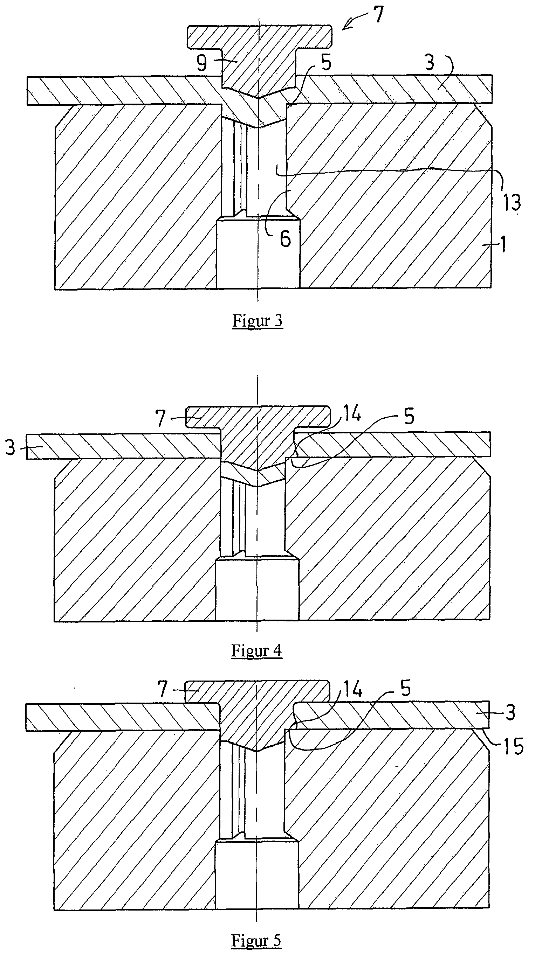

Zu Beginn des Stanzvorgangs, siehe Figur 3, stanzt der Schaft 9 in dem Plattenelement 3 eine Öffnung und drückt das Material innerhalb der Kante 10 nach unten in den Durchgang 13 hinein. An der Stelle, wo die Rippe 6 den Vorsprung 5 bildet, prallt die Stirnfläche des Schafts in ihrem Randbereich auf diesen Vorsprung 5, der in der Anlagefläche 2 der Matrize 1 liegt. Dies ist rechts in den Schnitten zu sehen. Durch das Aufprallen, siehe Figur 4, wird das Material des Schafts an dieser Stelle nach außen verformt. Es bildet sich ein nach außen gerichteter Vorsprung 14, der bei vollständigem Eindringen, siehe Figur 5, vollständig ausgebildet ist. Im Bereich dieses durch den Vorsprung 5 der Matrize gebildeten Vorsprungs 14 des Nietschafts 9 verläuft die Rückseite des Nietschafts des Nietelements 7 bündig mit der Rückseite 15 des Plattenelements 3. Das Nietelement 7 ist in diesem Zustand sowohl in Auszugsrichtung als auch in Drehrichtung formschlüssig und kraftschlüssig mit dem Plattenelement 3 verbunden.

Bei dem dargestellten Ausführungsbeispiel wird das Nietelement 7 mit einem Plattenelement 3 verbunden. Es ist natürlich auch möglich, mit der gleichen Anordnung das Nietelement 7 durch zwei übereinandergelegte Plattenelemente hindurchzustanzen und mit dem jeweils unteren Plattenelement 3 durch radiale Verformung zu vernieten. Das obere Plattenelement wird dabei zwischen dem Kopf des Nietelements 7 und dem unteren Plattenelement 3 festgelegt. Auch hierbei handelt es sich um eine Anordnung zum Verbinden eines Nietelements mit einem Plattenelement, da die Vernietung als radiale Verformung mit dem unteren Plattenelement erfolgt.

## Patentansprüche

1. Anordnung zum Verbinden von Nietelementen (7) mit einem Plattenelement (3), mit
einer Matrize (1) mit einer dem Schaft (9) des Nietelements (7) entsprechenden von einer Anlagefläche (2) ausgehenden Öffnung (4),
einer Halterung beziehungsweise Führung für ein gegenüber der Öffnung (4) der Matrize (1) ausgerichtetes Nietelement (7),
einem Stempel zum Einpressen des Nietelements (7) durch das Plattenelement (3), wobei
die Öffnung (4) der Matrize (1) mindestens einen nach innen gerichteten Vorsprung (5) aufweist,
**dadurch gekennzeichnet, dass**
-die dem Plattenelement (3) zugewandte Vorderseite des Vorsprungs (5) in der Anlagefläche (2) der Matrize (1) liegt.

2. Anordnung nach Anspruch 1, bei der die Öffnung (4) in der Anlagefläche (2) der Matrize (1) scharfkantig ausgebildet ist.

3. Anordnung nach einem der vorhergehenden Ansprüche, mit mehreren Vorsprüngen (5) in der Öffnung (4) der Matrize (1), die vorzugsweise gleichmäßig über den Umfang der Öffnung (4) verteilt angeordnet sind.

4. Anordnung nach einem der vorhergehenden Ansprüche, bei der der mindestens eine Vorsprung (4) als einstückiger Teil der Matrize (1) ausgebildet ist.

5. Verfahren zum Verbinden von Nietelementen (7) mit einem Plattenelement (3), mit folgenden Verfahrensschritten:
eine Matrize (1) mit einer dem Schaft (9) des Nietelements (7) entsprechenden Öffnung (4) wird vorbereitet,
das Plattenelement (3) wird an die Anlagefläche (2) der Matrize (1) angelegt,
das Nietelement (7) wird gegenüber der Öffnung (4) der Matrize (1) ausgerichtet,
das Nietelement (7) wird gegen das Plattenelement (3) angepresst,
das Nietelement (7) wird in die Öffnung (4) eingedrückt,
der Schaft (9) des Nietelements (7) wird innerhalb des in dem Plattenelement (3) gestanzten Lochs an mindestens einer Stelle radial verformt, **dadurch gekennzeichnet**,
der Schaft (9) des Nietelements (7) durch das Auftreffen der Stirnfläche des Schafts (9) auf der Anlagefläche (2) der Matrize (1) an mindestens einer Stelle radial verformt wird,
die radiale Verformung des Schafts (9) des Nietelements (7) derart geschieht, dass die Stirnfläche des Schafts (9) mindestens im Bereich eines nach innen gerichteten Vorsprungs (5) der Matrize (1) bündig mit der Rückseite des Plattenelements (3) verläuft.

6. Verfahren nach Anspruch 5, bei dem der Schaft (9) des Nietelements (7) während des Auftreffens der Stirnfläche des Schafts (9) auf der Anlagefläche (2) der Matrize (1) verformt wird.

7. Verfahren nach einem der Ansprüche 5 oder 6, bei dem der Schaft (9) des Nietelements (7) an mehreren Stellen radial verformt wird, die vorzugsweise gleichmäßig über den Umfang der Öffnung (4) verteilt angeordnet werden.

## Claims

1. Arrangement for connecting rivet elements (7) to a plate element (3), having
a die (1) with an opening (4) that corresponds to the shank (9) of the rivet element (7) and starts from an abutment surface (2),
a holder or guide for a rivet element (7) oriented with respect to the opening (4) in the die (1),
a punch for pressing the rivet element (7) through the plate element (3), wherein
the opening (4) in the die (1) has at least one inwardly directed protrusion (5),
**characterized in that**
the front side, facing the plate element (3), of the protrusion (5) lies in the abutment surface (2) of the die (1).

2. Arrangement according to Claim 1, in which the opening (4) is formed in a sharp-edged manner in the abutment surface (2) of the die (1).

3. Arrangement according to either of the preceding claims, having a plurality of protrusions (5) in the opening (4) in the die (1), which are preferably arranged in a manner distributed uniformly around the circumference of the opening (4).

4. Arrangement according to one of the preceding claims, in which the at least one protrusion (4) is configured as an integral part of the die (1).

5. Method for connecting rivet elements (7) to a plate element (3), having the following method steps:
a die (1) with an opening (4) that corresponds to the shank (9) of the rivet element (7) is prepared, the plate element (3) is placed against the abutment surface (2) of the die (1),
the rivet element (7) is oriented with respect to the opening (4) in the die (1),
the rivet element (7) is pressed against the plate element (3),
the rivet element (7) is pushed into the opening (4),
within the hole punched in the plate element (3), the shank (9) of the rivet element (7) is radially deformed at at least one point, **characterized in that**
the shank (9) of the rivet element (7) is radially deformed at at least one point by the end face of the shank (9) striking the abutment surface (2) of the die (1),
the radial deformation of the shank (9) of the rivet element (7) takes place in such a way that the end face of the shank (9) extends flush with the rear side of the plate element (3), at least in the region of an inwardly directed protrusion (5) of the die (1) .

6. Method according to Claim 5, in which the shank (9) of the rivet element (7) is deformed while the end face of the shank (9) strikes the abutment surface (2) of the die (1).

7. Method according to either of Claims 5 and 6, in which the shank (9) of the rivet element (7) is radially deformed at several points, which are arranged preferably in a manner distributed uniformly around the circumference of the opening (4) .

## Revendications

1. Agencement pour l'assemblage d'éléments de rivet (7) avec un élément de plaque (3), comprenant
une matrice (1) dotée d'une ouverture (4) correspondant à la tige (9) de l'élément de rivet (7) à partir d'une face d'appui (2),
un support ou un guide pour un élément de rivet (7) orienté par rapport à l'ouverture (4) de la matrice (1),
un poussoir pour enfoncer l'élément de rivet (7) à travers l'élément de plaque (3), dans lequel
l'ouverture (4) de la matrice (1) présente au moins une saillie (5) orientée vers l'intérieur,
**caractérisé en ce que** le côté avant de la saillie (5) tourné vers l'élément de plaque (3) se situe dans la face d'appui (2) de la matrice (1).

2. Agencement selon la revendication 1, dans lequel l'ouverture (4) est formée à arête vive dans la face d'appui (2) de la matrice (1).

3. Agencement selon l'une quelconque des revendications précédentes, avec plusieurs saillies (5) dans l'ouverture (4) de la matrice (1), qui sont de préférence réparties uniformément sur la périphérie de l'ouverture (4).

4. Agencement selon l'une quelconque des revendications précédentes, dans lequel ladite au moins une saillie (4) est formée d'une seule pièce avec la matrice (1).

5. Procédé d'assemblage d'éléments de rivet (7) avec un élément de plaque (3), comprenant les étapes suivantes:
on prépare une matrice (1) dotée d'une ouverture (4) correspondant à la tige (9) de l'élément de rivet (7),
on pose l'élément de plaque (3) sur la face d'appui (2) de la matrice (1),
on oriente l'élément de rivet (7) par rapport à l'ouverture (4) de la matrice (1),
on presse l'élément de rivet (7) contre l'élément de plaque (3),
on enfonce l'élément de rivet (7) dans l'ouverture (4),
on déforme la tige (9) de l'élément de rivet (7) radialement en au moins un point à l'intérieur du trou estampé dans l'élément de plaque (3),
**caractérisé en ce que**
on déforme la tige (9) de l'élément de rivet (7) radialement en au moins un point par l'arrivée de la face frontale de la tige (9) sur la face d'appui (2) de la matrice (1),
la déformation radiale de la tige (9) de l'élément de rivet (7) se produit de telle manière que la face frontale de la tige (9) se place à fleur du côté arrière de l'élément de plaque (3) au moins dans la région d'une saillie dirigée vers l'intérieur (5) de la matrice (1).

6. Procédé selon la revendication 5, dans lequel on déforme la tige (9) de l'élément de rivet (7) pendant l'arrivée de la face frontale de la tige (9) sur la face d'appui (2) de la matrice (1).

7. Procédé selon une des revendications 5 ou 6, dans lequel on déforme la tige (9) de l'élément de rivet (7) radialement en plusieurs points, qui sont de préférence répartis uniformément sur la périphérie de l'ouverture (4) .
